# EUROPEAN PATENT APPLICATION

(11) **EP 2 840 520 A1**
(43) Date of publication of application: **25.02.2015**
(21) Application number: 13181086.3
(22) Date of filing: 20.08.2013
(51) Int. Cl.: G06F 21/12

(54) **Protection unit for protecting an application against unauthorized use on a computer system**

(71) Applicant: SFNT Germany GmbH, 82110 Germering (DE)
(72) Inventor: Lange, Andreas, 82256 Fürstenfeldbruck (DE); Yubao, Cheng, DongCheng District Beijing (CN); Zunke, Michael, 85551 Kirchheim (DE)
(74) Representative: Geyer, Fehners & Partner

(57) **Abstract**

There is provided a protection unit for protecting an application (10) against unauthorized use on a computer system (2), wherein said protection unit (1) comprises a license model with at least one condition to be fulfilled and wherein said license model is implemented by a corresponding license control logic and said protection unit (1) will only allow the execution of the application (10) if said at least one condition of said license model is fulfilled, wherein the protection unit (1) is programmable and can load and execute license software code (7) for realizing said license control logic.

## Description

The present invention relates to a protection unit for protecting an application against unauthorized use on a computer system with the features of the preamble of claim 1.

Such a protection unit usually provides a limited set of different license models. These license models are used by software vendors or by end-user organizations, for example, to control where and how applications (software products) are able to run. It protects software vendors from losses due to software piracy and enables end-user organizations to enforce compliance with software license agreements or licensing models.

However, there is a need for further license models which are different from the limited set of license models provided by known protection units. In order to satisfy this need the software vendor or the end-user organization have to implement the desired license model in the application. This is time consuming and not so secure as a license model implemented in the protection unit since the protection unit is usually better secured against (or against undesired reverse engineering) cracking than the application itself.

In view thereof, it is object of the present invention to provide the possibility of a secure protection of an application to be protected against unauthorized use in combination with flexible license models.

The object is solved by a protection unit with the features of claim 1.

Since the protection unit is programmable and can load and execute license software code for realizing the license control logic a secure protection of the application in combination with a flexible license model can be provided. In particular, very sophisticated and complicated license models can be realized.

By providing the protection unit according to the invention it is possible to completely separate the license model from the application to be licensed. It is only necessary to include a kind of license call to be executed when the application is to be executed. The license call is directed to the protection unit which checks whether the conditions for the license model, which is assigned to this application, are fulfilled or not. Only if the conditions are fulfilled, the protection unit will allow the execution of the application.

Since the license model is separated from the application to be licensed an amending of the license model does not lead to the requirement that the application to be licensed has also to be amended. Therefore, the application to be licensed has to be amended or generated only once and can be delivered to a customer with the specific license model for this customer. This can also be called "protect once deliver many". This simplifies the distribution of the application in particular in the case that the company programming the application and the vendor are different companies, since it is only necessary to create the license software code for the desired license model.

In addition, it is possible, to offer new license models for the license application already used by a customer. When the customer wants to change his license model, it is only necessary to load the corresponding license software code for the new license model on the protection unit which can be present by the customer. Of course this loading is carried out in a secure way such that it is not possible for the customer to create and load new license software code to the protection unit.

The license software code is in the secure environment of the protection unit and outside the access of any attacker. With the protection unit according to the invention it is further possible to offer or to provide a wide range of flexible usage-centric software licensing models, such as execution licenses, trial licenses, subscription licenses, and some advanced combined licenses. Besides that it is possible, for the software vendors for example, to customize their own-defined license models as they expected for special usages like resource access/operation control. For example, a license model can be realized, in which maximal N executions per working day are allowed. Further, it is possible to realize a license model, in which for every M executions of a pay per use feature of the application the user will get one (or more than one) free use of the same and/or another feature of the application.

In particular, the license model can not only include a yes/no decision, but it is possible to adapt the price to be paid depending on the specific usage of the application, for example.

The protection unit can carry out an authentication check of the license software code and will only execute the license software code if the authentication check leads to the result that the loaded software license code is authentic.

The protection unit can carry out an authentication check of the license software code and will only install the license software code in the protection unit if the authentication check leads to the result that the loaded software license code is authentic.

In particular, the above described both authentication checks can be carried out in combination or only one of both authentication checks can be carried out.

For example, if the authentication check is to be carried out before installing the software license code in the protection unit the authentication check before executing the software license code can be omitted. This leads to a faster execution of the software license code.

If the software license code is dynamically loaded in the protection unit it is preferred to carry out the authentication check before executing the loaded software license code.

The software license code can be permanently installed in the protection unit or it is possible to dynamically load the software license code when needed.

In particular, the authentication check can comprise the check of a digital signature and/or decrypting of the license software code. In case of decrypting of the license software code it is preferred that the license software code is stored in encrypted form in the protection unit.

The protection unit can provide a sandbox and/or a virtual machine for executing the license software code. By providing a sandbox and/or a virtual machine a high security can be achieved since the license software code is strictly separated from the remaining parts of the protection unit.

Further, the protection unit can comprise at least one secure resource, which can not be accessed from the outside of the protection unit, and the license software code uses, when executed, the at least one secure resource of the protection unit. The secure resource can be an AES resource (Advanced Encryption Standard resource), an AES key resource, a data resource, a clock resource, a timer resource, etc.

The protection unit can comprise at least a further license model with at least one condition to be fulfilled, wherein the at least one further license model is implemented in the protection unit such that the at least one further license model can not be amended from outside the protection unit. In particular, the at least one further license model can not be amended at all. It can only be possible to set at least one parameter for the at least one further license model.

The at least one further license model can be a license model checking the maximal number of executions, checking whether the execution of the application lies in a time period defined by a start date and end date, for example, or checking whether the execution of the application lies in a predetermined time period starting with the first execution (e.g., 30 days, 60 days, or 90 days).

In particular, it is possible that the license software code uses at least one of the at least one further license model for creating a more complex license model. If the number of executions are counted, it is possible to decrement the counter by a different value based on different login request from the application (for example from different parts of the application). Further, it is possible to create a license model checking the maximal concurrency such that during a first set of month the maximal concurrency is 10 and during a second set of month the maximal concurrency is 20, for example.

With the protection unit according to the present invention it is possible to create a license model that can use any resource and/or any element provided by the protection unit.

The protection unit can be embodied as a hardware key (also often named dongle). Further, the protection unit can comprise a controller, a memory as well as an input/output unit. The protection unit may also be located on the computer system itself or on another computer system. The protection unit can be realized as a pure software area (for example, of the computer system on which the application is to be executed), which is protected against aggression by hackers (or attackers) and/or can not be directly copied, for example. In particular, the protection unit can be embodied as a self-contained device.

The computer system according to the invention may be a single computer, a computer network or any other programmable device by which the instructions of the application may be executed. Likewise, the protection unit may also be a single computer, a computer network or any other programmable devise, by which the license software code can be executed and which can be connected with the computer system on which the application is to be protected.

There is further provided a method for creating a license model for a protection unit used to protect an application against unauthorized use on a computer system, wherein the method comprising the steps of: creating license software code realizing a license control logic of the license model, and loading the license software code in the protection unit, wherein the protection unit will execute the license software code and as a result will only allow the execution of the application if the at least one condition of the license model is fulfilled.

The protection unit for which the license model is created can be the protection unit according to the invention (including the respective further developments of the protection unit).

There is further provided a module for creating a license model for the protection unit according to the invention (including the respective further developments of the protection unit), comprising a creating unit for creating the license software code realizing the license control logic of the license model, and a loading unit for loading the license software code in the protection unit, wherein the protection unit will execute the license software code and as a result will only allow the execution of the application if the at least one condition of the license model is fulfilled.

The module can provide the possibility to create and store license model templates. These templates can be used when creating the license software code. In particular, the license model templates can be combined with corresponding parameters for creating the desired license model.

The module can be embodied as hardware and/or software. In particular, the module can be a computer system.

There is further provided the use of the protection unit according to the invention (including the respective further developments of the protection unit) for protecting the application against unauthorized use on a computer system.

It is understood that the features named above and still to be explained below can be used not only in the given combinations, but also in other combinations or alone, without departing from the scope of the present invention.

The invention is explained in further detail below by way of example using the attached drawing which also disclose features essential to the invention. There are shown in:
- Fig. 1: a schematic view of a protection unit 1 according to the invention which is connected to a computer system 2;
- Fig. 2: a schematic view of a part of the logical structure of the protection unit 1 in connection with a schematically shown login request of the application;
- Fig. 3: a schematic view for explaining the generation of the license byte code 7;
- Fig. 4: an example of a Java license source code 11 for a specific license model, and
- Fig. 5: a schematic view of a module 20 for creating a license model for the protection unit.

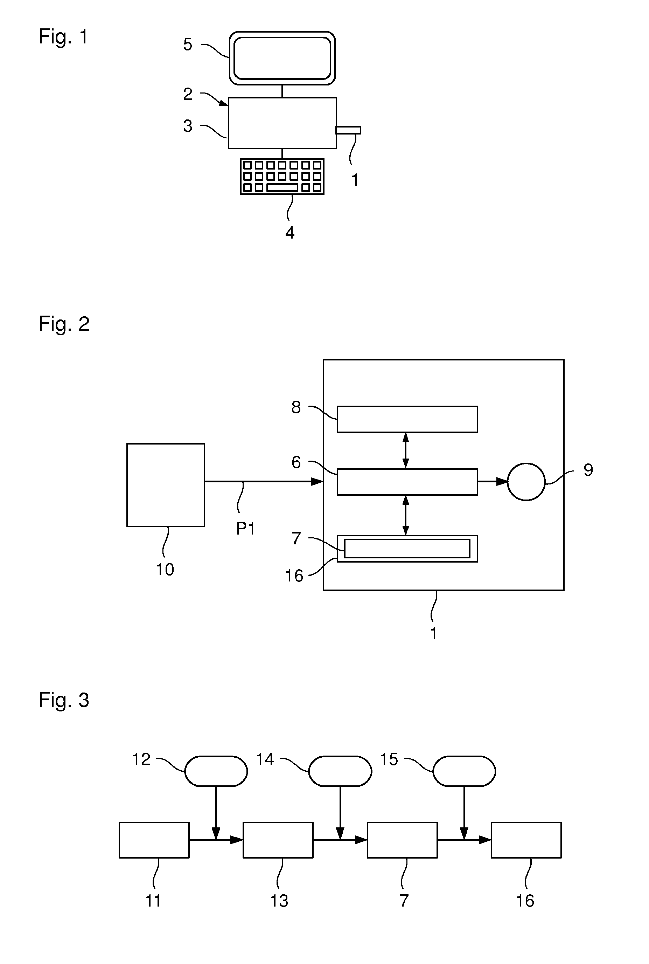

In the embodiment shown in Fig. 1 a protection unit 1 according to the invention is connected to a computer system 2. The computer system 2 can comprise a computing section 3 (comprising, for example, a processor, a hard disc, further hardware elements as well as an operating system), an input unit 4 (in this case, for example, a keyboard) as well as an output unit 5 (e.g. a screen).

The protection unit 1 can comprise a controller, a memory, as well as an input/output unit (none of which are shown), and is plugged into an interface of the computer system 1 (in this case the universal serial bus interface). Of course, the protection unit 1 can be plugged into any other interface (e.g. a parallel interface) the computer system 1 or can be connected in any other way with the computer system 1. In the embodiment shown in Fig. 1 the protection unit 1 is provided without its own current supply and is accordingly supplied with energy via the interface of the computer system 1.

The protection unit 1 is used for protecting an application (e.g. a software program) against unauthorized use on the computer system 2, i.e. the protection unit 1 ensures that it will be only possible to execute the application on the computer system 2 if this execution is an authorized or licensed execution. The execution will be an authorized or licensed execution if at least one predetermined condition is fulfilled. The condition can be for example a predetermined number of executions, a time period during which the execution of the application is allowed, etc. Each condition or combination of conditions which have to be fulfilled so that the protection unit 1 allows the execution of the application on the computer system 1 can be called a license model.

Up to now known protection units only provide a limited set of different license models. Therefore, if a vendor of the application wants to implement a license model which is not one of the license models provided by the known protection unit the software vendor will have to implement the desired license model in the application itself. This is time consuming and not so secure as a license model implemented in the protection unit since the protection unit is usually better secured against attacks for cracking (or against reverse engineering) than the application itself.

In view thereof, the protection unit 1 according to the invention is embodied as a programmable protection unit 1 which can load and execute license software code (for example license byte code) for realizing a license control logic implementing the desired license model.

As shown in the schematic representation in Fig. 2 the protection unit 1 comprises a virtual machine 6 for executing license byte code 7 stored in a license byte code file 16 and can store license terms 8 which can be some related license information like the allowed number of executions of the application.

Further, the protection unit 1 can comprise secure resources which can not be accessed from outside the protection unit 1. As an example for a secure resource a clock source 9 is shown in Fig. 2.

An example for a license model which can be created is a license that allows maximal N executions per working day. The corresponding license byte code 7 for implementing this license model is loaded in the protection unit 1.

The application 10 to be protected comprises a login step or login request when it is started. Upon starting the application the login request is sent to the protection unit 1 as schematically shown in Fig. 2 (arrow P1). The login request includes an identification of the application 10 so that the protection unit 1 can check whether the conditions of the license model for this specific applications 10 are fulfilled or not. In the present example, the license byte code 7 is executed on the virtual machine 6 and checks whether the present day is a working day and whether the number of executions for this day exceeds the maximal number N of executions per working day or not. If the present day is a working day and if the present request for execution is not higher than N - 1 executions the virtual machine 6 will return the information "success" (or any other information indicating success) and then the licensed application 10 can successfully run. For example, a necessary decryption of at least a part of the licensed application 10 is carried out by using the protection unit 1. Otherwise, the virtual machine 6 will return the information "error" (or any other information indicating error) and the login will fail so that the necessary decryption of at least a part of the licensed application 10 will not be carried out. Therefore, the licensed application 10 can not be executed.

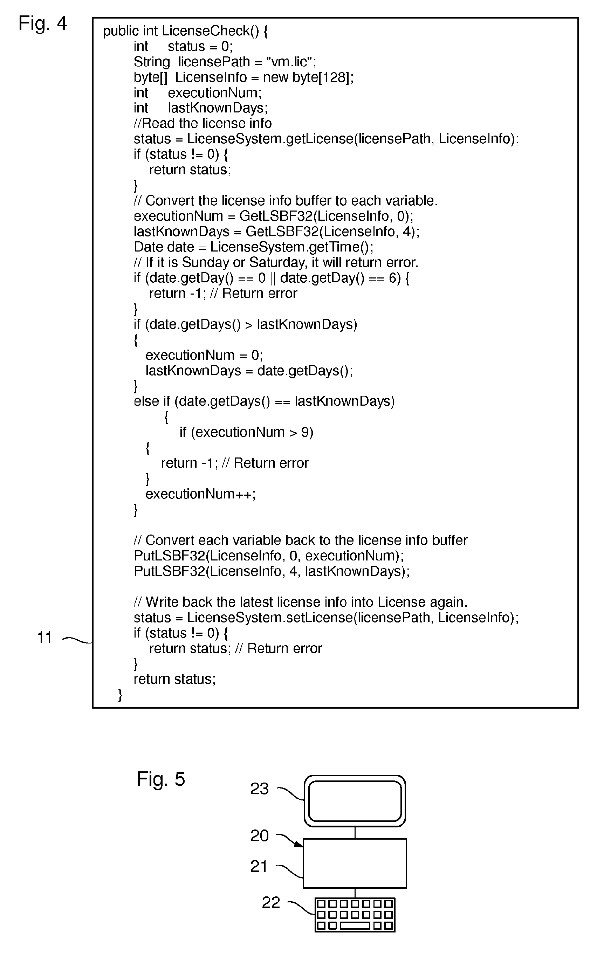

The license software code for realizing the license control logic of the desired license model can be created by using an advanced language, for example. As advanced languages .NET or Java can be used, for example. By using such a language a license source code 11 is created (Fig. 3). In Fig. 4 there is shown an example for a license source code in Java for the license model which allows maximal N execution per working day.

This license source code 11 is then converted by a compiler 12 (for example a Java compiler) in original byte code 13. The original byte code 13 is converted by a license byte code generator 14 in said license byte code 7 which is suitable for and supported by the virtual machine 6. This license byte code 7 can comprise a digital signature and/or can be encrypted, for example. This license byte code 7 can be loaded by a license byte code loader 15 in the protection unit so that the license byte code 7 is present as a license byte code file 16 in the protection unit 1.

For example, the license byte code loader 15 can check the digital signature of the license byte code 7 and will only allow the loading to the protection unit 1 if the digital signature is a valid signature.

Further, the protection unit 1 can check the digital signature and will only carry out the license byte code 7 and will only decrypt the encrypted license byte code 7 if the digital signature is correct. Further, the encryption of the license byte code can be carried out such that only one single protection unit 1 can decrypt the encrypted license byte code 7.

As shown in Fig. 5, there can be provided a module 20 for carrying out the steps described in connection with Fig. 3. The module 20 can be embodied as a computer system having a computing section 21, an input unit 22 as well as an output unit 23. The module 20 can provide the possibility to create and store license templates which can be used for creating a desired license. For example, the license according to Fig. 4 can be stored as a license template. If this license model is to be used it is only necessary to set a number for the maximal N executions per working day so that the license model is completed and can be used.

Of course, the module 20 can store different license templates which can also be used in combination. Further, in case that the protection unit comprises at least one further license model which is implemented such that the at least one further license model can not be amended from outside the protection unit, the module 20 provides the possibility to also use this at least one further license model (alone or in combination with other license models).

It is possible to create the license model such that the license software code is permanently stored in the protection unit or that the license software code is dynamically loaded in the protection unit when needed. The loading can be carried out or initiated by the application to be protected against unauthorized use.

Since the protection unit 1 is programmable it is even possible to change or create a new license model in the field (when the customer is already using the protection unit 1).

Another advantage of the protection unit 1 according to the invention lies in the fact that the vendor has only to implement the login request to the application 10 to be licensed or to be protected. The type of license model for the protected application 10 can be varied from customer to customer. This is a result of the fact that the license model is completely separated from the application 10 to be licensed. Therefore, the application to be protected is only to be amended once (adding the license login) and the license model for the protected application can be changed many times.

## Claims

1. A protection unit for protecting an application (10) against unauthorized use on a computer system (2),
wherein said protection unit (1) comprises a license model with at least one condition to be fulfilled and
wherein said license model is implemented by a corresponding license control logic and said protection unit (1) will only allow the execution of the application (10) if said at least one condition of said license model is fulfilled,
**characterized in that**,
the protection unit (1) is programmable and can load and execute license software code (7) for realizing said license control logic.

2. The protection unit as claimed in claim 1, **characterized in that**,
the protection unit (10) carries out an authentication check of the license software code (7) and will only execute the license software code if the authentication check leads to the result that the loaded software license code (7) is authentic.

3. The protection unit as claimed in claim 1 or 2, **characterized in that**,
the protection unit (10) carries out an authentication check of the license software code (7) and will only install the license software code (7) in the protection unit (10) if the authentication check leads to the result that the loaded software license code (7) is authentic.

4. The protection unit as claimed in claim 2 or 3, **characterized in that**,
the authentication check comprises a check of a digital signature and/or decrypting of the license software code (7).

5. The protection unit as claimed in any of the above claims, **characterized in that**,
the protection unit (1) provides a sandbox for executing said license software code (7).

6. The protection unit as claimed in any of the above claims, **characterized in that**,
the protection unit (1) provides a virtual machine (6) for executing said license software code (7).

7. The protection unit as claimed in any of the above claims, **characterized in that**,
the protection unit (1) comprises at least one secure resource (9), which can not be accessed from outside of the protection unit (1), and that said license software code uses, when executed, said at least one secure resource (9) of the protection unit (1).

8. The protection unit as claimed in anyone of the above claims, **characterized in that**,
the protection unit (1) comprises at least a further license model with at least one condition to be fulfilled, wherein said at least one further license model is implemented in the protection unit (1) such that said at least one further license model can not be amended from outside the protection unit (1).

9. The protection unit as claimed in claim 8, **characterized in that**,
the license software code (7) uses the at least one further license model.

10. The protection unit as claimed in anyone of the above claims, **characterized in that**,
the protection unit (1) is embodied as a hardware key.

11. Method for creating a license model for the protection unit as claimed in anyone of the above claims, said method comprising the steps of:
creating the license software code realizing the license control logic of the license model, and
loading the license software code in said protection unit, wherein said protection unit will execute said license software code and as a result will only allow the execution of the application if said at least one condition of the license model is fulfilled.

12. Module for creating a license model for the protection unit as claimed in anyone of claims 1 to 10, comprising
a creating unit (20) for creating the license software code realizing the license control logic of the license model, and
a loading unit (20) for loading the license software code in said protection unit, wherein said protection unit will execute said license software code and as a result will only allow the execution of the application if said at least one condition of the license model is fulfilled.

13. Use of the protection unit as claimed in anyone of the claims 1 to 10 for protecting the application against unauthorized use on the computer system.
